# EUROPEAN PATENT SPECIFICATION

(11) **EP 2 862 414 B1**
(45) Date of publication and mention of the grant of the patent: **09.12.2015**
(21) Application number: 13729699.2
(22) Date of filing: 13.06.2013
(51) Int. Cl.: H04W 92/20, H04W 36/00

(54) **DATA COMPRESSION IN A COMMUNICATIONS NETWORK**
DATENKOMPRESSION IN EINEM KOMMUNIKATIONSNETZ
COMPRESSION DE DONNÉES DANS UN RÉSEAU DE COMMUNICATION

(30) Priority: 13.06.2012 US 201261659013 P
(43) Date of publication of application: 22.04.2015
(73) Proprietor: Telefonaktiebolaget L M Ericsson (publ), 164 83 Stockholm (SE)
(72) Inventor: STJERNHOLM, Paul, S-181 60 Lidingö (SE); ERIKSSON, Hans, S-192 48 Sollentuna (SE); KNUTSSON, Jens, S-182 45 Enebyberg (SE); PERSSON, Fredrik, S-195 44 Märsta (SE); WESTBERG, Lars, S-745 96 Enköping (SE)
(74) Representative: Brann AB
(86) International application number: PCT/EP2013/062303
(87) International publication number: WO 2013/186323

(56) References cited:
- EP-A1- 2 053 817
- WO-A2-01/39525
- WO-A2-2005/034411
- US-A1- 2005 276 247

## Description

### TECHNICAL FIELD

The invention relates to data compression in a communications network, and in particular to compression of data in a mobile communications network.

### BACKGROUND

When sending data over a communications network, compression is a technique that is used to minimize the bandwidth required by that data in order to make the communications network more efficient. This is particularly important for communications networks that rely on wireless transmission of data. Wireless Area Network (WAN) acceleration/optimization of sending data relies on many different optimization techniques to reduce the bandwidth needed by services when sending data. This improves the Quality of Experience (QoE) for the end user and lowers the network and transmission costs for the network operator.

Compressing the size of data content, using techniques such as de-duplication, may significantly reduce the bandwidth required, and solutions to do this are commercially available.

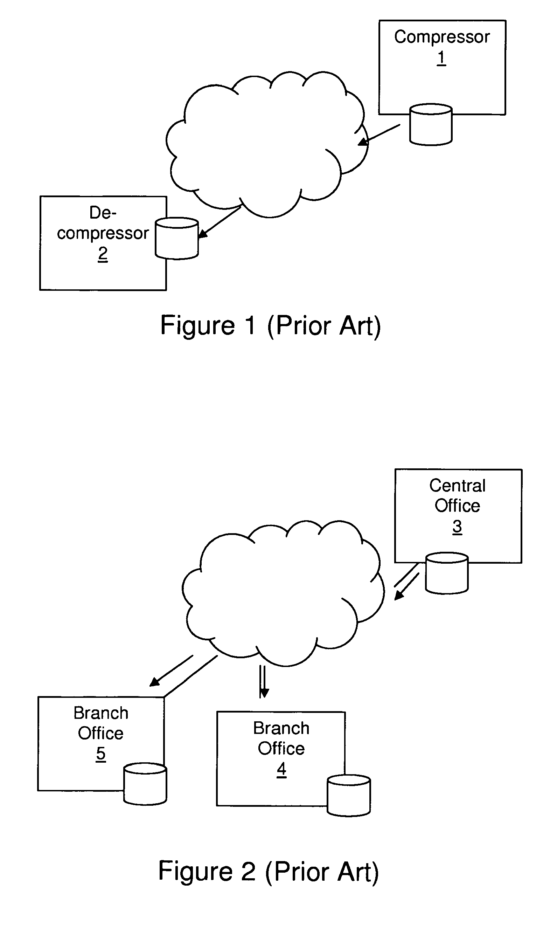

The process of de-duplication is illustrated in Figure 1, in which a compressor 1 or a de-compressor 2 identifies byte patterns in a payload of a data stream and associates an identified byte pattern with a shorter index, referred to as a signature. This is done for many byte patterns, leading to many signatures, which are stored in a database. The data payload and the associated signatures are transmitted to the remote side, where the same association is stored in a database. This phase is denoted as the learning phase. At some point in time the de-compressor 2 agrees with the compressor 1 to start sending compressed data over the link. Alternatively, a signature can be assigned to a pattern of bytes as soon as the pattern is repeated. Subsequent byte patterns identified by the compressor 1 are replaced with the corresponding signatures, which are sent over the link. At the de-compressor 2, the signatures are again replaced with the full byte patterns. The original data stream is thus recreated and further processed as normal. Solutions are implemented in the network user plane and do not rely on the control plane.

A compressor 1 typically associates the signatures with a de-compressor 2. The correct signatures may therefore rely on knowledge of the identity of the de-compressor 2 (or compressor 1). It is possible that a compressor 1 may associate a signature with a particular byte pattern for sending the data associated with the byte pattern to a particular de-compressor 2, and associate a different signature to the same byte pattern for sending the data associated with the byte pattern to a different de-compressor.

Existing techniques are typically intended for and designed for static point-to-point or point-to-multipoint deployment, as illustrated in Figure 2 (depicting an enterprise use case). This shows a node at a central office 3 communicating with fixed nodes at branch offices 4, 5. In this case, the central office node 3 compresses data, sends it to the branch offices 4, 5 which decompress the data. However, this cannot be directly deployed in a mobile network infrastructure if the decompressor is deployed at a level in the mobile network which is affected by mobility, since it cannot adapt to the mobility of a mobile user. The compressor must be aware that the identity of the de-compressor may change dynamically as a user's mobile terminal moves, and the compressor needs to know what signatures can be used when compressing data towards a certain de-compressor.

An alternative solution to cater for mobility is for the de-compressor to notify the compressor of an unknown signature in a session after mobile terminal cell change or handover. The compressor must then reset compression for that session and start the learning phase again. This approach results in compression on a per session basis, which is inefficient as the learning process can take several hours to reach a compression efficiency of 80%.

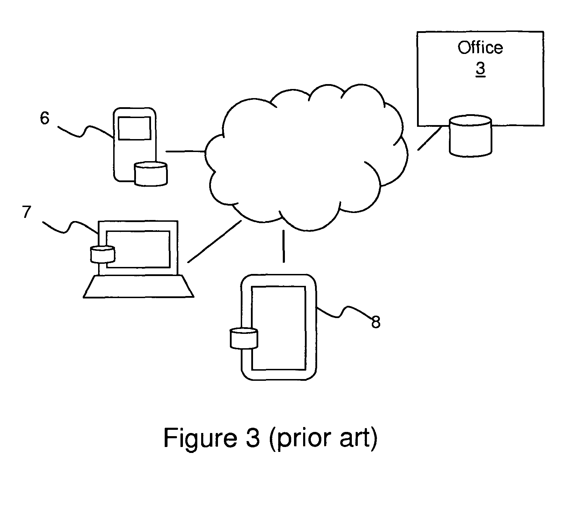

An alternative solution to account for the mobility of the end-user is to deploy the de-compression in the mobile terminal, i.e. a mobile phone or a mobile tab or laptop, as shown in Figure 3. In this case a central office node 3 communicates with, for example, any of a mobile phone 6, a laptop computer 7 or a tablet 8, which perform decompression of compressed data. However, this requires deep integration into the mobile devices 6, 7, 8, which is an issue when it comes to deploying it in a mobile network, especially with legacy mobile terminals.

Document EP 2 053 817 teaches handover processing to a different wireless access network. A unit checks whether a the destination access network supports a header (de) compression used in a handover source wireless access network. If not, a different execution point e.g. in the core network for the processing corresponding to the header (de) compression method is used and the message tunneled to this execution point.

Document WO 2005/034411 teaches that compression is usually performed between a tethered device connected to an access terminal / mobile terminal and a Packet Data Service Node. On handoff, if the PDSN changes, and the new PDSN does not support the compression protocol, then compression is deactivated by the tethered device.

### SUMMARY

It is an object of the invention to address the problems caused by mobile terminal mobility when sending and receiving compressed data. Furthermore, it is an object of the invention to mitigate the problems associated with the relearning phase when an identity of a compressor or decompressor changes owing to mobility of a mobile terminal.

According to a first aspect, there is provided a method of handling data compression in a mobile communication network. A node performing data compression on a downlink towards a mobile terminal compresses data on the basis of an identity of a decompression node. A determination is made that the mobile terminal is no longer receiving data from the decompression node owing to mobility the mobile terminal. The identity of a further decompression node from which the mobile terminal receives data is determined, and data is compressed on the basis of an identity of the further decompression node. An advantage of this is that the node performing compression can dynamically adapt to mobility of the terminal, potentially resulting in a shorter learning phase.

As an option, the node determines that the mobile terminal is no longer attached to the decompression node owing to mobility of the mobile terminal by receiving a mobile network control plane message, the message including an identity of the further decompression node. This allows the node to determine the identity of the further decompression node. As a further option, the mobile network control plane message is selected from at least any of an Update PDP Context Request, a Modify Bearer Request and a Create Session Request. The mobile network control plane message optionally further includes an indication as to whether compression is supported and an identity of the further decompression node.

As an alternative option, the determination that the mobile terminal is no longer attached to the decompression node owing to mobility of the mobile terminal is made by intercepting user plane traffic sent towards the mobile terminal, performing packet inspection on the intercepted user plane traffic, and determining the address of the further decompression node from header information in the intercepted user plane traffic. As a further option, the user plane traffic is on the GTP-U layer.

Optional examples of nodes performing data compression are any of a Gateway GPRS Support Node, a Serving Gateway, a Packet Data Network Gateway and a Serving GPRS Support Node.

Optional examples of the decompression node and the further decompression node are selected from any of an enhanced Node B, a Radio Network Controller, a Serving Gateway, and a Serving GPRS Support Node.

According to a second aspect, there is provided a node for performing data compression on a downlink towards a mobile terminal in a mobile communications network. The node is provided with a processor for compressing data on the basis of an identity of a decompression node. The processor is further arranged to determine that the mobile terminal is no longer attached to the decompression node owing to mobility of the mobile terminal. The processor is further arranged to determine the identity of a further decompression node to which the mobile terminal is attached, and to subsequently compress data on the basis of an identity of the further decompression node.

As an option, the node is optionally provided with a receiver for receiving a mobile network control plane message, the message including an identity of the further decompression node. As a further option, the mobile network control plane message is selected from at least any of an Update PDP Context Request, a Modify Bearer Request and a Create Session Request. The mobile network control plane message optionally includes an indication as to whether compression is supported and an identity of the further decompression node.

As an alternative option, the processor is further arranged to determine that the mobile terminal is no longer attached to the decompression node owing to mobility of the mobile terminal by intercepting user plane traffic sent towards the mobile terminal, performing packet inspection on the intercepted user plane traffic, and determining the address of the further decompression node from header information in the intercepted user plane traffic. As a further option, the user plane traffic is on the GTP-U layer.

Optional examples of the node are a Gateway GPRS Support Node, a Serving Gateway, a PDN Gateway and a Serving GPRS Support Node.

According to a third aspect, there is provided a computer program comprising computer readable code which, when run on a network node, causes the network node to perform the method as described above in the first aspect.

According to a fourth aspect, there is provided a computer program product comprising a non-transitory computer readable medium and a computer program as described above in the third aspect, wherein the computer program is stored on the computer readable medium.

### BRIEF DESCRIPTION OF DRAWINGS

Figure 1 illustrates schematically in a block diagram a network architecture and signalling for performing de-duplication when sending compressed data;
Figure 2 illustrates schematically in a block diagram a network architecture and signalling for performing compression when sending compressed data in an enterprise scenario;
Figure 3 illustrates schematically in a block diagram a network architecture and signalling for performing compression when sending compressed data in an enterprise scenario with a mobile workforce;
Figure 4 illustrates exemplary compression and decompression locations according to the type of access technology according to embodiments of the invention;
Figure 5 illustrates schematically an exemplary network architecture and signalling for handover of a UE in an LTE network;
Figure 6 is a flow diagram showing exemplary steps; and
Figure 7 illustrates schematically in a block diagram an exemplary network node.

### DETAILED DESCRIPTION

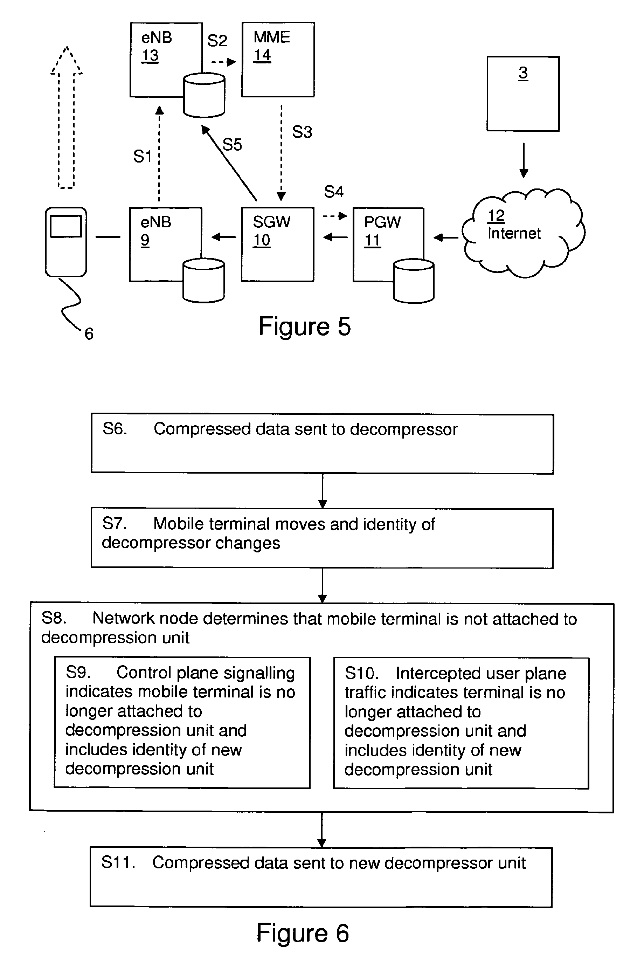

When an instance of a decompressor changes, for example because a mobile terminal 6has moved from a source Radio Network Controller (RNC) to a target RNC, a compressor is notified this via either mobile network control signalling or by inspection of packet headers (this situation is illustrated in Figure 5, in which a mobile terminal 6 moves from a source eNodeB 9 to a target eNodeB 13). The compressor may rely on using feedback in the mobile network control plane to notify the compressor of the identity of the de-compressor at each change of de-compressor instance. The notification may need to be relayed across one or more nodes in the mobile network. The notification is triggered by mobility events such as handover and cell change. Alternatively, instead of relying on a notification, the compressor may rely on intercepting user plane traffic to identify when a change of de-compressor occurs. The term "mobile terminal" is used herein to refer to any type of mobile equipment, examples of which are mobile phones, smartphones, laptop computers and so on.

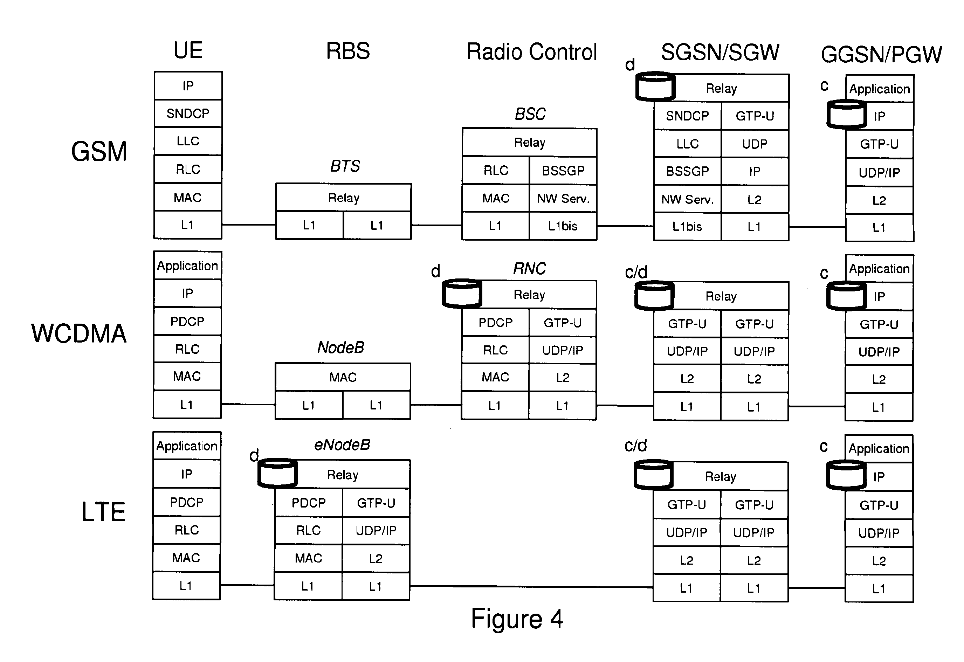

The deployment of compression and decompression may be performed on several levels in the network depending on the technology used. A solution depends on protocol layers on IP level and above being accessible, which disqualifies some nodes, e.g. the Base Transceiver Station (BTS) in GSM. Figure 4 shows different network nodes for perform compression/decompression operations in different networks. The GGSN/PGW nodes can perform compression, intermediate nodes in WCDMA and LTE can perform either compression or decompression, and the intermediate nodes at the RNC and eNodeB can perform decompression. This assumes a downlink connection, and it will be appreciated that the roles are reversed for an uplink.

To maximize the downlink gains in the mobile network, compression is ideally performed at the ingress at the Gi/SGi interface in the GGSN/PGW and de-compression is performed as close to the air interface as possible. For GSM, this is at the SGSN/SGW, for WCDMA the RNC, and for LTE the eNodeB. This does not prohibit deployment of compression or decompression in any other feasible node.

To avoid repeating the learning phase at handover (e.g. from one RNC to another), the compressor needs to be informed the identity of the de-compressor used, in order to apply the signatures known by the de-compressor. This could be achieved by control signalling (in which the compressor is notified of the change of de-compressor) or by intercepting user plane traffic (in which the new de-compressor can be identified by intercepting traffic and inspecting packet headers).

The following description assumes that only one de-compressor is deployed per node, but it will be appreciated that the techniques can be extended to identify different de-compressors at the same node.

Where control plane signalling is used to notify the compressor of the change in decompressor, the already standardized handover signalling scheme is used to convey information to the compressor of a change in de-compressor at handover or cell change. Figure 5 illustrates mobility by an example of X2 handover completion procedure in an LTE network in which a mobile device 4 is attached to an eNodeB 9 and communicates with a source 3 of compressed data via a Serving Gateway (SGW) 10, a PDN Gateway (PGW) 11 and the Internet 12. Handover is from the source eNodeB 9 to a target eNodeB 13.

The following numbering corresponds to that of Figure 5:
S1. User plane data is forwarded to the target eNodeB 13 over an X2 interface.
S2. The target eNodeB 13 sends a Path Switch Request to a Mobility Management Entity (MME) 14 to switch the user plane directly to the target eNodeB 13.
S3. The MME 14 sends a Modify Bearer Request (at intra-SGW handover) or a Create Session Request (at inter-SGW handover) to the SGW 10.
S4. The SGW 10 sends a Modify Bearer Request to the PGW 11 to establish a new GPRS Tunnelling Protocol (GTP)-U tunnel towards the target eNodeB 13.
S5. After the path switch, user plane traffic is sent from the SGW 10 to the target eNodeB 13.

As described above, the PGW 11 may be notified of the change of de-compressor, or may discover the change. Figure 6 is a flow diagram illustrating the main steps of the two main embodiments described above. The following numbering corresponds to that of Figure 6:
S6. Compressed data is sent from a compression unit to a decompression unit on a downlink towards a mobile terminal 6.
S7. Mobility of the mobile terminal 6 results in the identity of the decompression unit changing.
S8. The node hosting the compression unit (in the example of Figure 5, this is the PGW 11) determines that the mobile terminal 6 is no longer receiving data from the decompression unit (in the example of Figure 5, this is the eNodeB 9).
S9. In the event that the node 11 hosting the compression unit relies on control plane signalling, it receives a mobile network control plane message informing it of the identity of the new decompression unit (in the example of Figure 5, the target eNodeB 13) to which the mobile terminal 6 is now attached. This may be in the form of an existing Update PDP Context Request, a Modify Bearer Request or a Create Session Request, or in a new Information Element contained in any of those messages. The process continues at step S11.
S10. Alternatively, the node 11 hosting the compression unit intercepts user plane traffic sent towards the mobile terminal, performed packet inspection on the intercepted user plane traffic and determines the identity or address of the new decompression unit using header information in the intercepted user plane traffic.
S11. The node 11 hosting the compression unit compresses data on the basis of the identity of the new decompression unit.

Depending on the location of the compressor, existing 3GPP standards messages may already contain information conveying the location of the de-compressor and, therefore implicitly identify the de-compressor. Table 1 below indicates alternative exemplary locations of the compressor and de-compressor and indicates whether location information is available in 3GPP standardized control messages or not.

**Table 1. Signalling impact for downlink compression**

| Compressor location | De-compressor location | 3GPP message to compressor node | De-compressor location information available in 3GPP |
|---|---|---|---|
| GGSN/PGW | SGSN/SGW | Update PDP Context Request / Modify Bearer Request | Yes |
| GGSN/PGW | RNC | Update PDP Context Request / Modify Bearer Request | Partly. NodeB address/identity needs to be appended when GTP direct tunnel is not used. |
| PGW | eNodeB | Modify Bearer Request | No. eNodeB address/identity needs to be appended. |
| SGW | RNC | Modify Bearer Request / Create Session Request | Partly. RNC address/identity needs to be appended when GTP direct tunnel is not used. |
| SGSN | RNC | Update PDP Context Request | Yes |
| SGW | eNodeB | Modify Bearer Request / Create Session Request | Yes |

The messages Modify Bearer Request (intra-SGW), Create Session Request (inter-SGW) and Update PDP Context may be involved in mobility procedures affecting the compression function. Note that these are not always involved and that are be mobility procedures where messages are not affected (e.g. Forward Relocation Request), or where a compression function is not affected (for example, where they are executed below the downlink de-compressor).

As an example, an exemplary Serving Radio Network Subsystem (SRNS) relocation procedure is shown in Figure 39, "SRNS Relocation Procedure" in 3GPP TS 23.060, General Packet Radio Service (GPRS); Service description; Stage 2 (12.0.0). In this Figure, a Mobile Station (MS) moves from a source RNC to a target RNC, the RNCs being served by different SGSNs and in which a GGSN compresses data sent towards the MS. The Update PDP Context Requests may be used to send information affecting compression operations.

As a further example, an X2-based handover without a SGW relocation procedure is shown in Figure 10.1.2.1.1-1, "Intra-MME/Serving Gateway HO" in 3GPP TS 36.300, Evolved Universal Terrestrial Radio Access (E-UTRA) and Evolved Universal Terrestrial Radio Access Network (E-UTRAN); Stage 2 (11.5.0). A User Equipment (UE) moves from a source eNodeB to a target eNodeB, and a PGW compresses data which is sent via a SGW. In this example, Modify Bearer Request messages may be used to send information affecting compression operations.

As a further example, an X2-based handover with a SGW relocation procedure is shown in Figure 5.5.1.1.3-1, "X2-based handover with Serving GW relocation" in 3GPP TS 23.401, "General Packet Radio Service (GPRS) enhancements for Evolved Universal Terrestrial Radio Access Network (E-UTRAN) access (12.0.0). Again, Modify Bearer Request messages and Create Session Request messages may be used to send information affecting compression operations.

As a further example, an exemplary GERAN A/Gb mode handover is shown in Figure 10, "PS Handover Execution Phase; Inter-SGSN case (GERAN A/Gb mode à GERAN A/Gb mode)" in 3GPP TS 43.129, Technical Specification Group GSM/EDGE Radio Access Network; "Packet-switched handover for GERAN A/Gb mode". Update PDP Context Request messages may be used to send information affecting compression operations.

An exemplary UTRAN to E-UTRAN lu mode Inter RAT handover procedure is shown in Figure 5.5.2.2.3-1, "UTRAN lu mode to E-UTRAN Inter RAT HO, execution phase" in 3GPP TS 23.401, "General Packet Radio Service (GPRS) enhancements for Evolved Universal Terrestrial Radio Access Network (E-UTRAN) access (12.0.0)". The nodes involved are a UE, a source RNC, a target eNodeB, a source SGSN, a target MME, a source SGW, a target SGW, a PGW and a HSS. Modify Bearer Request messages may be used to send information affecting compression operations.

In order to implement control plane signalling without having to amend 3GPP standards, existing control signalling messages can be used, depending on the locations of the compressor/de-compressor, as shown in Table 1. Examples are Update PDP Context Request, Modify Bearer Request and Create Session Request. These require a GTP direct tunnel, which requires support throughout the network.

Additionally, new Information Elements (IE) are added to the signalling control messages Update PDP Context Request, Modify Bearer Request and Create Session Request indicating whether compression is supported and the identity or location of the remote side de-compressor. However, this would require modification of existing 3GPP standards such as 3GPP TS 23.060, General Packet Radio Service (GPRS); Stage 2 and 3GPP TS 23.401, General Packet Radio Service (GPRS) enhancements for Evolved Universal Terrestrial Radio Access Network (E-UTRAN) access.

As mentioned above, the compressor may be notified of a change in instance of a decompressor by user plane interception of packets. Solutions based on intercepting the user plane are currently deployed at the IP layer, but not on the GTP-U layer. Figure 4 shows that at the potential compression/de-compression locations, the IP layer is encapsulated in the GTP-U protocol. This indicates that user plane interception to notify the compressor of a change in instance of the decompressor requires that packet inspection is capable of handling GTP-U.

In order to use GTP-U to inform the compressor of the change in instance of the de-compressor, the GTP-U header must include at least the address of the node at which the de-compressor is located.

The endpoints of GTP tunnels in a GSM network are the SGSN and the GGSN. The endpoints of GTP tunnels in a WCDMA network are the GGSN, the SGSN and the RNC. The endpoints of GTP tunnels in an LTE network are the PGW, the SGW and the eNodeB. The applicability of end-points in the Core Network depends on whether GTP direct tunnelling is configured or not.

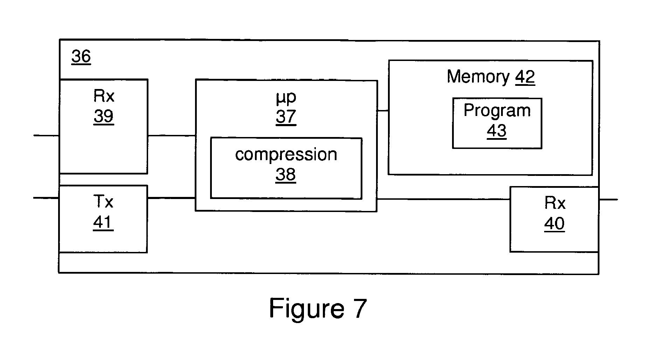

Figure 7 illustrates a network node 36 according to embodiments of the invention. The node 36 comprises a processor 37 that operates a compression function 38. The processor 37 compresses data on the basis of the identity of the decompression unit (located, for example, at an RNC) to which the compressed data is sent. When the processor 37 determines that the mobile terminal 6 is no longer receiving data from the decompression unit owing to mobility of the mobile terminal 6, it determines the identity of a further decompression unit (located, for example, at a new RNC) to which the mobile terminal 6 is attached. The processor 37 subsequently compresses data on the basis of an identity of the further decompression unit.

In the control plane embodiment described above, the node 36 is provided with a receiver 39 for receiving a mobile network control plane message that includes an identity of the further decompression unit.

In the user plane traffic embodiment described above, the node 36 is provided with a second receiver 40 for receiving user plane traffic. The processor 37 is arranged to determine that the mobile terminal 6 is no longer receiving data from the decompression unit node owing to mobility of the mobile terminal by intercepting user plane traffic sent towards the mobile terminal, performing packet inspection on the intercepted user plane traffic, and determining the address of the further decompression node from header information in the intercepted user plane traffic, which can then be sent using a transmitter 41.

A non-transitory computer readable medium in the form of a memory 42 may also be provided, which can be used to store a program 43. The program 43, when executed by the processor 37, causes the network node 36 to behave as described above.

The techniques described above allows implementing compression techniques such as de-duplication on IP level in the user plane of a mobile network, by deploying compression and de-compression in mobile network nodes. The solution allows the downstream compressor to dynamically adapt to changes of the de-compressor due to the mobility of the mobile terminal. It relies on either already existing mobility control messages in the control plane, or alternatively inspection of the GTP-U headers. The former alternative provides a more flexible solution.

Network based content compression as described above is advantageous for session based de-compression or de-compression in a mobile terminal. It provides a larger compression gain due to a shorter learning phase, since the de-compressor learns from more data streams. It also has no impact on mobile terminals.

It will be appreciated by the person of skill in the art that various modifications may be made to the above described embodiment without departing from the scope of the present invention. For example, the functions of the network node are described as being embodied at a single node, but it will be appreciated that different functions may be provided at different network nodes. Furthermore, where a single functional entity such as a processor is described, it will be appreciated that the functions of that processor may be performed by different physical processors. The above description gives the example of compression information comprising a byte pattern and associated signature. It will be appreciated that the techniques described above may apply to other types of compression information, such as compression information arising from compression techniques such as data differencing.

The following acronyms have been used in the above description:
- DL: Downlink
- eNodeB: enhanced Node B
- GGSN: Gateway GPRS Support Node
- GPRS: General Packet Radio Service
- GTP: GPRS Tunnelling Protocol
- HSS: Home Subscriber Server
- IE: Information Elements
- LTE: Long Term Evolution
- MME: Mobility Management Entity
- Mobile Station: (MS)
- OAM: Operation and Maintenance
- PDN: Packet Data Network
- PGW: PDN Gateway
- QoE: Quality of Experience
- RAN: Radio Access Network
- RIM: RAN Information Management
- RNC: Radio Network Controller
- SGW: Serving Gateway
- SGSN: Serving GPRS Support Node
- SRNS: Serving Radio Network Subsystem
- SI: Signalling Information
- SIB: Signalling Information Block
- TCP: Transport Control Protocol
- UE: User Equipment
- UL: Uplink
- WAN: Wireless Area Network
- WCDMA: Wideband Code Division Multiple Access

## Claims

1. A method of handling data compression in a mobile communication network, the method comprising:
at a node (11) performing data compression on a downlink towards a mobile terminal (6), compressing (S6) data on the basis of an identity of a decompression node (9);
determining (S8) that the mobile terminal (6) is no longer receiving data from the decompression node (9) owing to mobility (S7) of the mobile terminal;
determining (S9, S10) the identity of a further decompression node (13) from which the mobile terminal receives data; and
compressing (S11) data on the basis of an identity of the further decompression node.

2. The method according to claim 1, further comprising:
determining that the mobile terminal is no longer attached to the decompression node owing to mobility of the mobile terminal by receiving (S9) a mobile network control plane message, the message including an identity of the further decompression node.

3. The method according to claim 2, wherein the mobile network control plane message is selected from at least any of an Update PDP Context Request, a Modify Bearer Request and a Create Session Request.

4. The method according to claim 3, wherein the mobile network control plane message further includes an indication as to whether compression is supported and an identity of the further decompression node.

5. The method according to claim 1, further comprising:
determining that the mobile terminal is no longer attached to the decompression node owing to mobility of the mobile terminal by:
intercepting (S10) user plane traffic sent towards the mobile terminal;
performing packet inspection on the intercepted user plane traffic; and
determining the address of the further decompression node from header information in the intercepted user plane traffic.

6. The method according to claim 5, wherein the user plane traffic is on the GTP-U layer.

7. The method according to any of claims 1 to 6, wherein the node performing data compression is selected from any of a Gateway GPRS Support Node, a Serving Gateway, a Packet Data Network Gateway and a Serving GPRS Support Node.

8. The method according to any of claims 1 to 6, wherein any of the decompression node and the further decompression node is selected from any of an enhanced Node B, a Radio Network Controller, a Serving Gateway, and a Serving GPRS Support Node.

9. A node (36) for performing data compression on a downlink towards a mobile terminal (6) in a mobile communications network, the node comprising:
a processor (37) for compressing data on the basis of an identity of a decompression node;
the processor (37) being further arranged to determine that the mobile terminal (6) is no longer attached to the decompression node owing to mobility of the mobile terminal;
the processor (37) being further arranged to determine the identity of a further decompression node to which the mobile terminal is attached; and
the processor (37) being further arranged to compress data on the basis of an identity of the further decompression node.

10. The node according to claim 9, further comprising:
a receiver (39) for receiving a mobile network control plane message, the message including an identity of the further decompression node.

11. The node according to claim 10, wherein the mobile network control plane message is selected from at least any of an Update PDP Context Request, a Modify Bearer Request and a Create Session Request.

12. The node according to claim 11, wherein the mobile network control plane message further includes an indication as to whether compression is supported and an identity of the further decompression node.

13. The node according to claim 9, wherein the processor (37) is further arranged to determine that the mobile terminal (6) is no longer attached to the decompression node owing to mobility of the mobile terminal by intercepting user plane traffic sent towards the mobile terminal, performing packet inspection on the intercepted user plane traffic, and determining the address of the further decompression node from header information in the intercepted user plane traffic.

14. The node according to claim 13, wherein the user plane traffic is on the GTP-U layer.

15. The node according to any of claims 9 to 14, wherein the node is selected from any of a Gateway GPRS Support Node, a Serving Gateway, a PDN Gateway and a Serving GPRS Support Node.

16. A computer program (43), comprising computer readable code which, when run on a network node (36), causes the network node (36) to perform the method as claimed in any of claims 1 to 8.

17. A computer program product comprising a non-transitory computer readable medium and a computer program (43) according to claim 16, wherein the computer program is stored on the computer readable medium.

## Patentansprüche

1. Verfahren zum Handhaben einer Datenkomprimierung in einem Mobilfunknetz, wobei das Verfahren Folgendes umfasst:
Ausführen einer Datenkomprimierung an einem Knoten (11) an einer Abwärtsverbindung zu einem mobilen Terminal (6), Komprimieren (S6) von Daten auf der Grundlage einer Kennung eines Dekomprimierungsknotens (9);
Bestimmen (S8), dass das mobile Terminal (6) aufgrund der Beweglichkeit (S7) des mobilen Terminals keine Daten mehr von dem Dekomprimierungsknoten (9) empfängt;
Bestimmen (S9, S10) der Kennung eines weiteren Dekomprimierungsknotens (13), von welchem das mobile Terminal Daten empfängt; und
Komprimieren (S11) von Daten auf der Grundlage einer Kennung des weiteren Dekomprimierungsknotens.

2. Verfahren nach Anspruch 1, ferner Folgendes umfassend:
Bestimmen, dass das mobile Terminal aufgrund der Beweglichkeit des mobilen Terminals nicht mehr mit dem Dekomprimierungsknoten verbunden ist, durch Empfangen (S9) einer Mobilnetz-Steuerungsebenennachricht, wobei die Nachricht eine Kennung des weiteren Dekomprimierungsknotens umfasst.

3. Verfahren nach Anspruch 2, wobei die Mobilnetz-Steuerungsebenennachricht aus zumindest einer der Folgenden ausgewählt wird: einer Aktualisiere-PDP-Kontext-Anforderung, einer Ändere-Träger-Anforderung ("Modify Bearer Request") und einer Erstelle-Sitzung-Anforderung ("Create Session Request").

4. Verfahren nach Anspruch 3, wobei die Mobilnetz-Steuerungsebenennachricht einen Hinweis darüber, ob eine Komprimierung unterstützt wird, und eine Kennung des weiteren Dekomprimierungsknotens umfasst.

5. Verfahren nach Anspruch 1, ferner Folgendes umfassend:
Bestimmen, dass das mobile Terminal aufgrund der Beweglichkeit des mobilen Terminals nicht mehr mit dem Dekomprimierungsknoten verbunden ist, durch:
Erfassen (S10) von Anwenderebenenverkehr, der zu dem mobilen Terminal gesendet wird;
Durchführen einer Datenpaket-Inspektion gegenüber dem erfassten Anwenderebenenverkehr; und
Bestimmen der Adresse des weiteren Dekomprimierungsknotens ausgehend von Header-Informationen in dem erfassten Anwenderebenenverkehr.

6. Verfahren nach Anspruch 5, wobei sich der Anwenderebenenverkehr auf der GTP-U-Schicht befindet.

7. Verfahren nach einem der Ansprüche 1 bis 6, wobei der Knoten, der die Datenkomprimierung ausführt, aus einem beliebigen der Folgenden ausgewählt wird: einem Gateway-GPRS-Verbindungsknoten ("Gateway GPRS Support Node"), einem bedienenden ("Serving") Gateway, einem Paketdaten-Netzwerk-Gateway ("Packet Data Network Gateway") und einem bedienenden GPRS-Verbindungsknoten ("Serving GPRS Support Node").

8. Verfahren nach einem der Ansprüche 1 bis 6, wobei der Dekomprimierungsknoten und/oder der weitere Dekomprimierungsknoten aus einem beliebigen der Folgenden ausgewählt werden: einem erweiterten Knoten B, einer Funknetzsteuerung, einem bedienenden Gateway und einem bedienenden GPRS-Verbindungsknoten.

9. Knoten (36) zum Ausführen einer Datenkomprimierung an einer Abwärtsverbindung zu einem mobilen Terminal (6) in einem Mobilfunknetz, wobei der Knoten Folgendes umfasst:
einen Prozessor (37) zum Komprimieren von Daten auf der Grundlage einer Kennung eines Dekomprimierungsknotens;
wobei der Prozessor (37) ferner derart angeordnet ist, um zu bestimmen, dass das mobile Terminal (6) aufgrund der Beweglichkeit des mobilen Terminals nicht mehr mit dem Dekomprimierungsknoten verbunden ist;
wobei der Prozessor (37) ferner derart angeordnet ist, um die Kennung eines weiteren Dekomprimierungsknotens, mit dem das mobile Terminal verbunden ist, zu bestimmen; und
wobei der Prozessor (37) ferner derart angeordnet ist, um Daten auf der Grundlage einer Kennung des weiteren Dekomprimierungsknotens zu komprimieren.

10. Knoten nach Anspruch 9, ferner Folgendes umfassend:
eine Empfangseinheit (39) zum Empfangen einer Mobilnetz-Steuerungsebenennachricht, wobei die Nachricht eine Kennung des weiteren Dekomprimierungsknotens umfasst.

11. Knoten nach Anspruch 10, wobei die Mobilnetz-Steuerungsebenennachricht aus zumindest einer der Folgenden ausgewählt wird: einer Aktualisiere-PDP-Kontext-Anforderung, einer Ändere-Träger-Anforderung und einer Erstelle-Sitzung-Anforderung.

12. Knoten nach Anspruch 11, wobei die Mobilnetz-Steuerungsebenennachricht einen Hinweis darüber, ob eine Komprimierung unterstützt wird, und eine Kennung des weiteren Dekomprimierungsknotens umfasst.

13. Knoten nach Anspruch 9, wobei der Prozessor (37) ferner zu Folgendem angeordnet ist: Bestimmen, dass das mobile Terminal (6) aufgrund der Beweglichkeit des mobilen Terminals nicht mehr mit dem Dekomprimierungsknoten verbunden ist, durch Erfassen von Anwenderebenenverkehr, der zu dem mobilen Terminal gesendet wird, Durchführen einer Datenpaket-Inspektion gegenüber dem erfassten Anwenderebenenverkehr und Bestimmen der Adresse des weiteren Dekomprimierungsknotens ausgehend von Header-Informationen in dem erfassten Anwenderebenenverkehr.

14. Knoten nach Anspruch 13, wobei sich der Anwenderebenenverkehr auf der GTP-U-Schicht befindet.

15. Knoten nach einem der Ansprüche 9 bis 14, wobei der Knoten aus einem beliebigen der Folgenden ausgewählt wird: einem Gateway-GPRS-Verbindungsknoten, einem bedienenden Gateway, einem PDN-Gateway und einem bedienenden GPRS-Verbindungsknoten.

16. Rechnerprogramm (43), umfassend einen rechnerlesbaren Code, der, wenn auf einem Netzwerkknoten (36) betrieben, den Netzwerkknoten (36) veranlasst, das wie in einem der Ansprüche 1 bis 8 beanspruchte Verfahren auszuführen.

17. Rechnerprogrammprodukt, umfassend ein nicht übergangsmäßiges rechnerlesbares Medium und ein Rechnerprogramm (43) nach Anspruch 16, wobei das Rechnerprogramm auf dem rechnerlesbaren Medium gespeichert ist.

## Revendications

1. Procédé de traitement de la compression de données dans un réseau de communication mobile, le procédé comprenant :
au niveau d'un noeud (11) l'exécution de la compression de données sur une liaison descendante vers un terminal mobile (6), la compression (S6) de données sur la base d'une identité d'un noeud de décompression (9) ;
la détermination (S8) du fait que le terminal mobile (6) ne reçoit plus de données provenant du noeud de décompression (9) en raison de la mobilité (S7) du terminal mobile ;
la détermination (S9, S10) de l'identité d'un noeud de décompression supplémentaire (13) à partir duquel le terminal mobile reçoit des données ; et
la compression (S11) des données sur la base d'une identité du noeud de décompression supplémentaire.

2. Procédé selon la revendication 1, comprenant en outre :
la détermination du fait que le terminal mobile n'est plus relié au noeud de décompression en raison de la mobilité du terminal mobile par la réception (S9) d'un message de plan de commande de réseau mobile, le message incluant une identité du noeud de décompression supplémentaire.

3. Procédé selon la revendication 2, dans lequel le message de plan de commande de réseau mobile est choisi parmi au moins l'un quelconque d'une demande de contexte PDP de mise à jour, d'une demande de modification de porteuse et d'une demande de création de session.

4. Procédé selon la revendication 3, dans lequel le message de plan de commande de réseau mobile comprend en outre une indication permettant de savoir si la compression est prise en charge et une identité du noeud de décompression supplémentaire.

5. Procédé selon la revendication 1, comprenant en outre :
la détermination du fait que le terminal mobile n'est plus relié au noeud de décompression en raison de la mobilité du terminal mobile par :
l'interception (S10) du trafic au niveau du plan utilisateur transmis vers le terminal mobile ;
l'exécution de l'inspection de paquets sur le trafic au niveau du plan utilisateur intercepté ; et
la détermination de l'adresse du noeud de décompression supplémentaire à partir des informations de l'en-tête dans le trafic au niveau du plan utilisateur intercepté.

6. Procédé selon la revendication 5, dans lequel le trafic au niveau du plan utilisateur se trouve sur la couche GTP-U.

7. Procédé selon l'une quelconque des revendications 1 à 6, dans lequel le noeud exécutant la compression de données est choisi parmi l'un quelconque d'un noeud de support GPRS de passerelle, d'une passerelle de service, d'une passerelle de réseau de données par paquets et d'un noeud de support GPRS de service.

8. Procédé selon l'une quelconque des revendications 1 à 6, dans lequel l'un quelconque du noeud de décompression et du noeud de décompression supplémentaire est choisi parmi l'un quelconque d'un noeud B amplifié, d'un contrôleur de réseau radio, d'une passerelle de service, et d'un noeud de support GPRS de service.

9. Noeud (36) servant à l'exécution de la compression de données sur une liaison descendante vers un terminal mobile (6) dans un réseau de communication mobile, le noeud comprenant :
un processeur (37) servant à la compression de données sur la base d'une identité d'un noeud de décompression ;
le processeur (37) étant en outre arrangé pour déterminer que le terminal mobile (6) n'est plus relié au noeud de décompression en raison de la mobilité du terminal mobile ;
le processeur (37) étant en outre arrangé pour déterminer l'identité d'un noeud de décompression supplémentaire auquel le terminal mobile est relié ; et
le processeur (37) étant en outre arrangé pour comprimer les données sur la base d'une identité du noeud de décompression supplémentaire.

10. Noeud selon la revendication 9, comprenant en outre :
un récepteur (39) servant à la réception d'un message de plan de commande de réseau mobile, le message incluant une identité du noeud de décompression supplémentaire.

11. Noeud selon la revendication 10, dans lequel le message de plan de commande de réseau mobile est choisi parmi au moins l'un quelconque d'une demande de contexte PDP de mise à jour, d'une demande de modification de porteuse et d'une demande de création de session.

12. Noeud selon la revendication 11, dans lequel le message de plan de commande de réseau mobile comprend en outre une indication permettant de savoir si la compression est prise en charge et une identité du noeud de décompression supplémentaire.

13. Noeud selon la revendication 9, dans lequel le processeur (37) est en outre arrangé pour déterminer que le terminal mobile (6) n'est plus relié au noeud de décompression en raison de la mobilité du terminal mobile par l'interception du trafic au niveau du plan utilisateur transmis vers le terminal mobile, l'exécution de l'inspection de paquets sur le trafic au niveau du plan utilisateur intercepté, et la détermination de l'adresse du noeud de décompression supplémentaire à partir des informations de l'en-tête dans le trafic au niveau du plan utilisateur intercepté.

14. Noeud selon la revendication 13, dans lequel le trafic au niveau du plan utilisateur se trouve sur la couche GTP-U.

15. Noeud selon l'une quelconque des revendications 9 à 14, dans lequel le noeud est choisi parmi l'un quelconque d'un noeud de support GPRS de passerelle, d'une passerelle de service, d'une passerelle PDN et d'un noeud de support GPRS de service.

16. Programme informatique (43), comprenant un code lisible par ordinateur qui, lorsqu'il est exécuté sur un noeud de réseau (36), commande au noeud de réseau (36) d'exécuter le procédé selon l'une quelconque des revendications 1 à 8.

17. Produit de programme informatique comprenant un support lisible par ordinateur non transitoire et un programme informatique (43) selon la revendication 16, dans lequel le programme informatique est stocké sur le support lisible par ordinateur.
